Europäisches Patentamt

European Patent Office

Office européen des brevets

(11) Numéro de publication: **0 406 550 A1**

## DEMANDE DE BREVET EUROPEEN

(21) Numéro de dépôt: 90109533.1

(22) Date de dépôt: **19.05.90**

(51) Int. Cl.5: **C01F 11/46, C04B 11/00, C04B 22/14, C04B 14/38, D21H 13/46, C09C 1/02, C08K 3/30**

Le titre de l'invention a été modifié (Directives relatives à l'examen pratiqué à l'OEB, A-III, 7.3)

(30) Priorité: **23.05.89 FR 8906704**

(43) Date de publication de la demande: **09.01.91 Bulletin 91/02**

(84) Etats contractants désignés: **AT BE CH DE ES GB IT LI NL SE**

(71) Demandeur: **LAFARGE COPPEE**
**28, rue Emile Ménier**
**F-75782 Paris Cedex 16(FR)**

(72) Inventeur: **Moisset, Jacques**
**Les Landes de Balandranne, Saint-Antoine**
**F-84800 L'Isle-Sur-Sorgue(FR)**
Inventeur: **Petit, Alain**
**22, rue Mozart, Lotissement Saint-Joseph**
**F-26200 Montelimar(FR)**

(74) Mandataire: **Eggert, Hans-Gunther, Dr.**
**Räderscheidtstrasse 1**
**D-5000 Köln 41(DE)**

(54) **Procédé de préparation par voie aqueuse de dihydrate de sulfate de calcium purifié.**

(57) Procédé de préparation par voie aqueuse de sulfate de calcium purifié, de grande blancheur se présentant, à la demande, sous l'aspect de structures cristallines polymorphes ou monomorphes longilignes, caractérisé en ce qu'il comprend :

a) la formation d'une solution aqueuse par dissolution de sulfate de calcium semihydraté impur, à une concentration d'au plus 13,0 grammes par litre (exprimée en Ca SO4 dissous) et à un pH d'au moins 5,5,

b) la séparation de la solution aqueuse contenant le sulfate de calcium dissous, de la phase solide insoluble formée par les impuretés à éliminer,

c) la recristallisation du sulfate de calcium purifié sous la forme dihydratée à partir de la solution aqueuse issue de l'étape <b>, éventuellement en présence d'une amorce de germination introduite dans le milieu réactionnel,

d) la séparation après recristallisation de la phase aqueuse appauvrie en sulfate de calcium dissous, de la phase solide constituée par le sulfate de calcium purifié recristallisé,

e) le recyclage de la phase aqueuse appauvrie en sulfate de calcium dissous vers l'étape <a> de dissolution de la source de sulfate de calcium impur.

Les structures cristallines purifiées obtenues selon le procédé sont destinées plus spécialement à des domaines d'application aussi divers que les ciments et plâtres, et plus spécialement à ceux du papier, de la peinture et des matières plastiques.

EP 0 406 550 A1

## PROCEDE DE PREPARATION PAR VOIE AQUEUSE DE SULFATE DE CALCIUM PURIFIE

### DOMAINE DE L'INVENTION

L'invention concerne un procédé de préparation par voie aqueuse de sulfate de calcium purifié à partir de sulfate de calcium impur d'origine naturelle ou synthétique.

L'invention concerne aussi les structures cristallines polymorphes de sulfate de calcium purifié résultant du procédé, démunies d'un facteur de forme maîtrisé.

L'invention concerne également les structures cristallines monomorphes longilignes de sulfate de calcium purifié résultant du procédé, dotées de longueur et de facteur de forme maîtrisés.

Telle qu'elle est utilisée ici, l'expression **"structures cristallines polymorphes"** désigne le domaine constitué par les cristaux individualisés se présentant simultanément en mélange sous l'aspect d'aiguilles de longueur et diamètre très diversifiés, d'écailles (mâcles), d'agrégats polycristallins et autres structures cristallines.

L'expression **"structures cristallines monomorphes longilignes"** désigne le domaine constitué par les cristaux individualisés se présentant sous l'aspect d'aiguilles, ou bien constitué par lesdits cristaux associés au plus trois à trois selon leur grand axe par recouvrement partiel, dotés d'une longueur et d'un facteur de forme maîtrisés.

Enfin, l'expression **"facteur de forme"** entend définir le rapport dimensionnel existant entre la longueur du cristal individuel ou des cristaux associés au plus trois à trois, et leur plus grand diamètre.

### ARRIERE-PLAN DE L'INVENTION

Depuis longtemps, le sulfate de calcium dihydraté, forme chimique plus communément connue sous la dénomination gypse, de formule $Ca\ SO_4, 2H_2O$, est la source de matière première pour la production de plâtres (sulfate de calcium semihydraté, de formule $Ca\ SO_4, 1/2\ H_2O$, de variété "$\alpha$" ou "$\beta$") résultant de son traitement thermique (à sec ou en présence d'eau sous forme liquide ou vapeur) entre 90°C et 250°C ; pour la production des anhydrites I, II et III (de formule $Ca\ SO_4$) l'une étant dite soluble (anhydrite III) quand le traitement est pratiqué à une température choisie dans l'intervalle 100°C à 250°C, les autres étant dites insolubles quand le traitement thermique dépasse la température de 250°C (anhydrite II ou Surcuit) ou de 1 200°C (anhydrite I).

Le gypse utilisé pour ces transformations thermiques peut avoir une origine naturelle et dans ce cas il est extrait de gisements fossiles, ou bien une origine synthétique et dès lors, il peut être un phosphogypse, un désulfogypse ou un gypse provenant de neutralisation chimique dans certains procédés industriels.

Qu'il soit d'origine naturelle ou synthétique, le gypse contient des impuretés plus ou moins gênantes qui se perpétuent dans les diverses formes chimiques résultant de sa transformation thermique.

Les impuretés les plus courantes sont, par exemple, des composés organiques tels que les acides humiques, des composés inorganiques simples, tels que les halogénures, les sulfates, les carbonates de calcium, de magnésium, de strontium, de radium (et autres), mais aussi des composés inorganiques complexes tels que les argiles, les fluosilicates de sodium, d'aluminium, de calcium (A.V. SLACK, Fertilizer Science and Technology Series - Volume 2, Phosphoric acid, part 2, Marcel DEKKER, Inc., New York, 1986, P.531 et 643. K. HAJI et T. TSUDA, Sekko to Sekkai, N.48, 1960, P.162 - Réf. : Chemical Abstracts, Volume 55, 1961, 9830), ou encore du type $Ca4\ Al\ Si.\ SO4\ F12\ OH.\ 12H2O$ ou $Ca4\ Al\ Si\ SO4\ F13.\ 12H2O$ (L.P. YERMILOVA, V.A. MOLEVA et R.V. FLEVTSOVA, ZAI ; Vsesoyuzn. Miner. Obshsh. 89,15 (1960 russe) ; J.R. LEHR, A.W. FRAZIER et J.P. SMITH, J. Agric. et Fd. Chem 14, 27 (1966), des composants radioactifs, du $P2\ O5$ et des fluorophosphates

$$(FP\ O^{\underline{\underline{=}}}_3 ).$$

Ces impuretés sont dans la plupart des cas insolubles ou très peu solubles dans l'eau et nécessiteraient de ce fait de grandes quantités d'eau pour les dissoudre et les éliminer sous cette forme.

Or, la présence d'au moins certaines impuretés dans de nombreux gypses naturels ou synthétiques compromet l'usage de ces gypses comme source de matière première dans les procédés de transformation thermique. Car ces impuretés peuvent être à l'origine de nombreux effets nocifs, par exemple sur la cinétique de la prise en masse du plâtre, sur le manque de blancheur des diverses formes chimiques et cristallines de sulfate de calcium (par transformation thermique du gypse) quand ces diverses formes sont destinées à jouer un rôle de charges pigmentaires blanches, ou encore sur l'aspect des structures cristallines elles-mêmes dont la maîtrise de la morphologie et/ou du facteur de forme peut être perturbée, voire irréversiblement compromise, enfin sur l'aspect polluant et éventuellement gênant de la radioactivité.

Tout l'intérêt d'une telle source de matière première se perçoit dès lors que son inexploitation apparait comme une perte économique importante, aussi bien pour le gypse naturel que synthétique et comme un risque de pollution majeure, puisque par milliers de tonnes, les gypses synthétiques font encore actuellement l'objet de stockage en carrière et en terrils ou de rejet dans les rivières et/ou fleuves, l'évacuation dans les eaux vives devenant inacceptable en raison des risques d'eutrophisation de ces eaux.

C'est pourquoi les gypses impurs ont été, comme le montre la littérature spécialisée, à l'origine de nombreuses descriptions de procédés de purification et de transformation en produits commercialisables, chaque procédé voulant apporter sa contribution à la lutte contre la pollution, à la valorisation des gypses impurs et à la maîtrise des conditions d'élimination de telle(s) ou telle(s) impureté(s).

Un premier type de procédé de purification propose d'éliminer les impuretés d'une source de sulfate de calcium semihydraté par leur solubilisation dans une phase liquide chimiquement neutre, grâce à un lavage à l'eau d'une source, suivi d'une séparation rapide de la liqueur de lavage et d'une mise en oeuvre quasi immédiate du sulfate de calcium semihydraté purifié. Un tel procédé, destiné à la production d'un sulfate de calcium semihydraté purifié, et illustré par le brevet français FR 2.359.692. consiste à laver rapidement sous basse température (entre 0°C et 30°C) du sulfate de calcium semihydraté impur provenant de la transformation thermique d'un gypse naturel contenant des impuretés hydrosolubles telles que chlorure, sulfates de calcium et de magnésium.

Mais si ce premier type de procédé a bien pour vocation l'obtention de sulfate de calcium semihydraté purifié, il présente le désavantage majeur de ne pouvoir s'appliquer qu'aux sulfates de calcium semi hydraté dont les impuretés sont hydrosolubles.

Un deuxième type de procédé de purification propose de mettre en oeuvre, comme dans le premier type, du sulfate de calcium semihydraté impur et se distingue du précédent par le fait essentiel qu'il vise apparemment à solubiliser, dans une phase aqueuse fortement acidifiée, les impuretés réputées insolubles dans l'eau.

Un procédé relevant de ce deuxième type est décrit dans le brevet français FR 2,064,195. Il consiste à traiter le sulfate de calcium semihydraté impur, sous l'état d'une suspension aqueuse hautement concentrée (50 grammes par litre à 650 grammes par litre) , par un agent acide en réglant le pH de ladite suspension à une valeur préférentiellement inférieure à 1,5 (pour provoquer la dissolution des impuretés), à maintenir la température de la suspension à une valeur choisie dans l'intervalle d'au moins 5°C à 60°C, le traitement s'effectuant en présence d'au moins un agent organique, et à réaliser en fin de traitement une hydroséparation de la phase solide.

Un tel type de procédé présente des inconvénients qui peuvent rendre son exploitation irréaliste, faisant douter de son caractère industriel, car le traitement acide de la suspension aqueuse hautement concentrée en matériaux impurs :
- ne peut parvenir qu'à une dissolution sélective des impuretés puisqu'il procure un produit ayant un degré de blancheur d'au mieux 90,5 pour cent (Exemple 2),
- entraîne la saturation rapide en impuretés dissoutes de la phase liquide et le risque de la reprécipitation de ces impuretés dans la phase solide,
- oblige à un lavage conséquent de la phase solide purifiée pour en éliminer les eaux mères acides d'imprégnation,
- est une source de pollution pour l'environnement en raison de l'inévitable rejet de la phase liquide acide saturée en impuretés, des eaux de lavage et de liquides organiques tels que des hydrocarbures,
- est économiquement désavantageux par sa forte consommation en eaux, en réactifs acides et éventuellement en réactifs de neutralisation des effluents liquides.

Un troisième type de procédé de purification, qui se distingue des autres types, consiste à solubiliser le gypse impur dans une solution chaude acide dans laquelle les impuretés sont, pour l'essentiel, insolubles, puis à séparer les impuretés et à recristalliser du gypse purifié par refroidissement de la solution riche en sulfate de calcium.

Un procédé de ce dernier type est décrit dans le brevet US 3,642,456 et comprend par étapes successives la dissolution du gypse impur dans une solution d'acide fluosilicique (à concentration de 15 pour cent à 26 pour cent en $H_2SiF_6$) portée à une température de 70°C à 90°C, la séparation sous la même température de la phase liquide et de la phase solide constituée par les impuretés insolubles, le refroidissement de la phase liquide jusqu'à une température d'environ 27°C à 33°C pour provoquer la précipitation du gypse purifié et enfin le lavage dudit gypse pour en éliminer la solution acide.

Toutefois, ce procédé, de même que les précédents, est à l'origine de désavantages certains qui le rendent industriellement difficilement exploitable.

Tout d'abord, les solutions aqueuses chaudes d'acide fluosilicique mises en oeuvre dans le procédé peuvent être à l'origine de graves phénomènes de corrosion qui nécessiteraient, pour les combattre, des installations complexes et très coûteuses.

De plus, les solutions aqueuses acides et chaudes dissolvent, au moins en partie, des impuretés qui syncristallisent avec le gypse purifié lors du refroidissement obligatoire de la solution de recristallisation.

En outre, les solutions aqueuses acides apparaissent comme une source de pollution pour l'environnement, dès lors qu'il faut les éliminer par un lavage conséquent du gypse purifié recristallisé qu'elles imprègnent.

Enfin, le procédé apparaît économiquement inintéressant en raison de sa forte consommation en eaux de lavage qu'il faut renouveler en réactifs acides, éventuellement en réactifs de neutralisation des effluents liquides, et de sa forte consommation en énergie liée aux conséquentes variations de température pratiquées.

Ainsi, bien que l'art antérieur ait préconisé, à travers les nombreuses publications, des moyens à utiliser pour préparer du sulfate de calcium purifié à partir de diverses sources de sulfate de calcium impur, ces moyens se sont révélés d'application difficile à l'échelle industrielle (procédé du type I), fortement polluants pour l'environnement, grands consommateurs d'eau, d'acides et d'agents de neutralisation et souvent peu efficaces parce que sélectifs de certaines impuretés à l'origine de la précipitation et/ou de la syncristallisation des impuretés initialement solubilisées avec le sulfate de calcium purifié (procédés des types II et III).

C'est pourquoi, il apparait nécessaire de disposer dans le domaine de la purification du sulfate de calcium, de moyens efficaces, économiques et non polluants.

Dès lors, les objectifs que vise l'invention sont d'isoler et d'éliminer les impuretés sans les solubiliser afin d'éviter la pollution de l'environnement par le rejet du liquide de dissolution desdites impuretés, d'exclure l'usage d'un milieu de traitement franchement acide parce que générateur de pollutions ultérieures et de grandes consommations d'eaux de lavage, de créer un procédé économe en eau à renouveler bien que travaillant sous une très faible concentration en matière sèche, et de produire du sulfate de calcium d'une grande blancheur, de faible contamination radioactive dans le cas du phosphogypse, se présentant à la demande sous l'aspect de structures cristallines polymorphes ou monomorphes longilignes possédant dans ce deuxième cas, longueur et facteur de forme maîtrisés.

## SOMMAIRE DE L'INVENTION

Consciente de l'importance des inconvénients précités, la demanderesse a visé, à travers ses recherches, la création d'un procédé de préparation par voie aqueuse de sulfate de calcium purifié répondant aux objectifs assignés.

Le procédé selon l'invention se caractérise en ce qu'il comprend :

a) la formation d'une solution aqueuse par dissolution de sulfate de calcium semihydraté impur, à une concentration d'au plus 13,0 grammes par litre (exprimée en sulfate de calcium dissous) et à un pH d'au moins 5,5,

b) la séparation de la solution aqueuse contenant le sulfate de calcium dissous, de la phase solide insoluble formée par les impuretés à éliminer,

c) la recristallisation du sulfate de calcium purifié sous la forme dihydratée à partir de la solution aqueuse issue de l'étape <b>, éventuellement en présence d'une amorce de germination introduite dans le milieu réactionnel,

d) la séparation après recristallisation de la phase aqueuse appauvrie en sulfate de calcium dissous, de la phase solide constituée par le sulfate de calcium purifié recristallisé,

e) le recyclage de la phase aqueuse appauvrie en sulfate de calcium dissous vers l'étape <a> de dissolution du sulfate de calcium impur.

## DESCRIPTION DETAILLEE DE L'INVENTION

Ainsi, le procédé selon l'invention se distingue de ceux décrits dans l'art antérieur par le fait qu'il opère une dissolution du sulfate de calcium impur et non pas des impuretés, que cette dissolution s'effectue dans une phase aqueuse ayant un pH d'au moins 5,5 insuffisamment acide pour amorcer la dissolution des impuretés, que la recristallisation du sulfate de calcium dihydraté purifié s'effectue à une température proche de celle de l'étape de dissolution, excluant ainsi toute action de refroidissement de la solution riche en sulfate de calcium dissous et qu'enfin, la phase aqueuse recueillie après l'étape de recristallisation est recyclée à l'étape de dissolution du sulfate de calcium impur, procurant ainsi un rendement global de recristallisation remarquable, une très faible consommation en eau et une absence de pollution de l'environnement par l'absence de rejet d'effluents liquides.

Selon le procédé de l'invention, la matière première à mettre en oeuvre, est constituée de sulfate de calcium semihydraté "β" et/ou "α" impur résultant du traitement thermique de gypses naturels ou synthétiques, tels que phosphogypses, désulfogypes, gypses provenant de neutralisations chimiques par les moyens connus de l'homme de métier, ledit sulfate de calcium semihydraté étant prélevé à la sortie de la zone de transformation thermique du gypse immédiatement après l'opération de cuisson. Toutefois la matière première lorsqu'elle est formée de sulfate de calcium semihydraté "α" peut provenir directement du traitement du minerai de phosphate, selon des procédés spécifiques bien connus de l'homme de l'art.

Dans le cas où la matière première contient des impuretés hydrosolubles particulièrement gênantes, telles que P2 O5 et/ou des fluorophosphates de calcium, il peut être souhaitable de pratiquer, avant sa mise en oeuvre, un prétraitement d'épuration, tel que par exemple un hydrocyclonage ou autres moyens connus de l'homme de l'art.

Selon une première variante, quand elles sont prélevées immédiatement après l'opération de cuisson du gypse, les particules de sulfate de calcium semihydraté impur sont choisies de telle manière que leur coupe granulométrique soit au plus de 10 000 micromètres, préférentiellement au plus de 5 000 micromètres et très préférentiellement au plus de 1 500 micromètres, les coupes granulométriques précitées étant habituellement acquises d'une manière connue, soit par une action mécanique sur le gypse avant et/ou pendant sa transformation thermique, soit encore sur le sulfate de calcium semihydraté par élimination des particules par trop grossières.

Dès lors, les particules de sulfate de calcium semihydraté impur constituant la matière première peuvent être mises en oeuvre dans le procédé de l'invention immédiatement après l'opération de cuisson ou encore après un refroidissement plus ou moins important. Aussi, lors de sa mise en oeuvre, la matière première peut se trouver à une température comprise dans l'intervalle de 150°C à 15°C.

Selon une deuxième variante qui permet d'augmenter la cinétique de dissolution du sulfate de calcium semihydraté dans le milieu aqueux, les particules dudit sulfate de calcium semihydraté impur sont soumises à une opération de broyage et/ou de sélection, de telle manière que les particules broyées aient une coupe granulométrique spécifique définie.

En général, les particules de sulfate de calcium semihydraté impur broyé et/ou sélectionné sont dotées d'une coupe granulométrique spécifique choisie dans l'intervalle 5 micromètres à 500 micromètres, préférentiellement dans l'intervalle 5 micromètres à 200 micromètres et très préférentiellement dans l'intervalle 5 micromètres à 100 micromètres.

Le broyage et/ou la sélection des particules de sulfate de calcium semihydraté impur sont effectués par les moyens connus de l'homme de l'art, tels que par l'usage de broyeurs à marteaux, à boulets, à doigts, ou autres, en atmosphère sèche ou en atmosphère contrôlée, et/ou de sélecteurs statiques ou dynamiques tels que par exemple à pales fixes, à rotors ou autres.

Dès lors, les particules de sulfate de calcium semihydraté impur broyé et/ou sélectionné peuvent être mises en oeuvre, selon le procédé de l'invention, d'une manière immédiate après le broyage et/ou la sélection, ou bien après un temps de repos plus ou moins prolongé provoquant un éventement (ou vieillissement) contrôlé, desdites particules, bien connu de l'homme de l'art.

Lors de l'application industrielle du procédé selon l'invention pour l'obtention de sulfate de calcium purifié, une solution aqueuse de sulfate de calcium semihydraté est mise en oeuvre ; cette solution aqueuse de sulfate de calcium peut être préparée par dissolution de la phase solide pulvérulente formée par le sulfate de calcium impur, ou peut être une solution aqueuse existante, de sulfate de calcium issu d'un procédé industriel en tant que sous-produit à valoriser.

Dans le cas de la formation de la solution aqueuse de sulfate de calcium, celle-ci s'effectue par la préparation d'une suspension de sulfate de calcium semihydraté impur dans la phase liquide aqueuse.

La solution aqueuse de sulfate de calcium mise en oeuvre dans le procédé dispose, en général, d'un pH choisi dans l'intervalle 5,5 à 13.

La phase liquide aqueuse est généralement à une température telle, que la solution aqueuse de sulfate de calcium ainsi formée soit à une température au plus égale à 70°C.

Dans le cas où la matière première est chaude, la solution aqueuse peut être préparée par dissolution, dans la phase liquide, de la phase solide pulvérulente qui peut se trouver à une température supérieure à la température de dissolution fixée au plus égale à 70° C dans le procédé selon l'invention.

La nature de l'eau intervenant en tant que phase liquide dans la formation de la solution aqueuse n'a pas une importance fondamentale quant à la maîtrise du procédé, mais il peut être souhaitable d'utiliser de l'eau distillée ou déminéralisée bien que toute eau disponible puisse être mise en oeuvre sans que des changements importants interviennent dans les réglages des autres paramètres du procédé.

Au cours de sa formation, la solution aqueuse de sulfate de calcium semihydraté est soumise à une agitation suffisante pour éviter la sédimentation dudit sulfate, favoriser sa dissolution dans l'étape <a> et faciliter l'élaboration des structures cristallines de sulfate de calcium dihydraté purifié dans l'étape <c> selon l'invention.

La concentration de la solution aqueuse ainsi formée exprimée en grammes de sulfate de calcium dissous par litre d'eau de dissolution peut varier préférentiellement entre 11 grammes par litre et 6 grammes par litre, cette concentration étant mesurée par le dosage des ions calcium présents dans la solution (spectrométrie plasma d'émission).

Selon la concentration souhaitée en sulfate de calcium dissous dans la phase aqueuse, la température de dissolution, qui ne doit pas dépasser 70° C, est préférentiellement choisie dans l'intervalle 0° C à 50° C et très préférentiellement dans l'intervalle 0° C à 35° C étant entendu que ladite température est choisie dans les basses valeurs desdits intervalles, quand il est souhaitable de favoriser l'obtention d'une solution aqueuse à concentration plus élevée en sulfate de calcium dissous.

En pratique, la température de dissolution est choisie dans le domaine précité d'une manière telle que la dissolution du sulfate de calcium semihydraté dans la phase aqueuse se fasse à la température minimum et dans un temps souhaitablement bref.

Selon que le sulfate de calcium semihydraté broyé utilisé comme matière première possède un réactivité telle que la cinétique de dissolution dans la phase aqueuse est trop rapide, il peut être intéressant dans le procédé selon l'invention, d'utiliser au cours de l'étape de dissolution au moins un agent retardateur de recristallisation, la présence d'un tel agent ayant la propriété d'augmenter artificiellement le temps disponible pour effectuer la dissolution sans subir le risque d'une recristallisation trop précoce. Un tel agent est préférentiellement choisi dans le groupe constitué par les protéines dégradées, les acides carboxyliques hydrosolubles et leurs sels, les acides phosphoniques et leurs sels, les acides phosphoriques et leurs sels, les acides sulfoniques et leurs sels et les glucoses.

L'opération de dissolution du sulfate de calcium semihydraté impur s'effectue habituellement en une étape, que le procédé selon l'invention se pratique d'une manière continue ou discontinue. Cependant, dans certains cas, tels que ceux par exemple où le sulfate de calcium semihydraté impur mis en oeuvre accuse une cinétique de dissolution lente (liée à son procédé de cuisson, à sa granulométrie, à son éventement ou à la présence d'un agent retardateur de recristallisation), il peut être intéressant de réaliser une dissolution par étapes successives entre lesquelles sont pratiquées des séparations liquide/solide, ou encore de recycler, en tête de l'étape de dissolution, la phase solide non dissoute, tout en pratiquant par séquences des purges pour éliminer les impuretés.

Au terme de la dissolution du sulfate de calcium semihydraté impur apparait une suspension aqueuse d'une phase solide, constituée par les impuretés à éliminer dans une phase liquide contenant en solution le sulfate de calcium dissous et certaines impuretés hydrosolubles, phases qui sont soumises à une séparation physique.

La séparation physique solide/liquide des particules d'impuretés est effectuée par les moyens connus de l'homme de l'art, tels que par exemple, filtration, décantation, centrifugation, floculation ou autres.

A la fin de cette séparation solide/liquide, la phase liquide recueillie contenant en solution le sulfate de calcium dissous constitue le milieu réactionnel de recristallisation du sulfate de calcium dihydraté purifié.

La présence de certaines impuretés hydrosolubles, telles que les sels alcalins, dans le milieu réactionnel de recristallisation ne constitue pas un risque perturbateur pour la recristallisation du sulfate de calcium dihydraté, les impuretés étant très diluées et appartenant au groupe des agents régulateurs de recristallisation.

Le procédé selon l'invention comporte également la présence, dans le milieu réactionnel constitué par la solution aqueuse de sulfate de calcium, d'une amorce de germination ayant la propriété d'intervenir sur la cinétique de la formation des structures cristallines de sulfate de calcium dihydraté recristallisé, cette amorce de germination étant préférentiellement constituée par les sulfates de calcium, le sulfate double de calcium et de potassium, le sulfate double de calcium et d'ammonium et le trisulfoaluminate de calcium, pris seuls ou en combinaison.

Dans le cas où il est souhaitable pour les emplois ultérieurs que le sulfate de calcium dihydraté recristallisé purifié ait une structure cristalline monomorphe, l'amorce de germination est introduite de préférence sous la morphologie recherchée, c'est-à-dire sous la forme d'une structure cristalline longiligne éventuellement sélectionnée et/ou broyée.

Mais, dans le cas où il n'est pas nécessaire que le sulfate de calcium dihydraté recristallisé purifié ait une structure monomorphe, l'amorce de germination éventuellement broyée peut être d'une structure polymorphe quelconque.

Le procédé selon l'invention peut également comporter au moins un agent régulateur de recristallisation distinct de l'amorce de germination précitée, ayant aussi la propriété d'intervenir sur la cinétique de formation des structures cristallines de sulfate de calcium purifié.

Selon le choix qui est fait de l'agent régulateur de recristallisation, il est possible de former des structures cristallines monomorphes longilignes dotées d'une longueur et d'un facteur de forme maîtrisés, grâce à l'usage d'un milieu hydroréactionnel évoluant d'un pH faiblement acide, voire neutre, à un pH alcalin. De ce fait, l'agent régulateur de recristallisation peut être choisi parmi les adjuvants n'ayant pas ou peu d'influence sur le pH de la solution aqueuse de recristallisation en raison de leur caractère chimiquement neutre ou bien ayant une influence marquée sur le pH en raison de leur caractère franchement alcalin.

Quand il n'est pas souhaitable de former des structures cristallines purifiées monomorphes, mais plutôt de produire des structures cristallines purifiées polymorphes, l'agent régulateur de recristallisation peut être choisi en particulier dans le groupe constitué par les sels des métaux monovalents ou polyvalents, et préférentiellement parmi les halogénures, les sulfates, les nitrates, les silicates, les halogénosilicates de lithium, de sodium, de potassium, d'ammonium, de calcium, de magnésium, d'aluminium, seuls ou en combinaison.

En pratique, les conditions les plus favorables à l'obtention des structures cristallines polymorphes sont telles que le pH de la solution de recristallisation est compris entre 5,5 et 9.

Par contre, quand il est souhaitable de former des structures cristallines monomorphes longilignes dotées d'une longueur et d'un facteur de forme maîtrisés, l'agent régulateur de recristallisation peut être choisi en particulier dans le groupe constitué par les hydroxydes alcalins, l'hydroxyde d'ammonium, les hydroxydes alcalino-terreux, les hydroxydes de magnésium ou de calcium, par les ciments PORTLAND, les ciments alumineux, l'aluminate de calcium, les aluminates alcalins, les aluminosilicates, seuls ou en combinaison.

Dans certains cas, il peut être souhaitable, voire préférable, d'associer au moins deux agents régulateurs de recristallisation provenant de l'un et l'autre groupe précités dans le but de maîtriser mieux encore les dimensions des structures cristallines monomorphes longilignes en cours de formation, et de jouer ainsi sur la longueur et le facteur de forme des structures longilignes.

L'agent régulateur de recristallisation est généralement introduit à raison de 0,01 gramme par litre à 3,0 grammes par litre de la solution aqueuse de recristallisation et préférentiellement de 0,1 gramme par litre à 0,75 gramme par litre.

En pratique, les conditions les plus favorables à l'obtention des structures cristallines monomorphes longilignes sont telles que le pH est compris entre 9 et 13, la recristallisation s'effectuant en présence d'une amorce de germination de même structure cristalline.

La température de la solution de recristallisation n'est pas un paramètre déterminant du procédé selon l'invention. En pratique, la température de ladite solution de recristallisation est choisie proche de la température de la solution de dissolution, c'est-à-dire de préférence comprise entre 0°C et 50°C et très préférentiellement comprise entre 0°C et 35°C.

D'autres agents, aux fonctions diverses et connues de l'homme de l'art, peuvent également être introduits dans la solution de recristallisation au moment le mieux choisi, tels que par exemple des agents dispersants ayant la propriété d'éviter l'agglomération des structures cristallines en cours de formation et de favoriser leur développement régulier.

Dès lors et contrairement aux enseignements de l'art antérieur préconisant des milieux hydroréactionnels de purification acides et hautement concentrés en sulfate de calcium à épurer, s'est révélée de manière inattendue la possibilité de former des structures cristallines de sulfate de calcium purifié, à la demande polymorphes ou monomorphes longilignes, grâce à un milieu hydroréactionnel à très faible teneur en sulfate de calcium dissous, évoluant d'un pH neutre vers un pH alcalin, maintenu à une température pratiquement constante et réputée basse, et ce, avec un excellent rendement.

Au terme de la transformation hydroréactionnelle, les structures cristallines de sulfate de calcium dihydraté purifiées sont obtenues avec un bon rendement de transformation du sulfate de calcium semihydraté impur mis en oeuvre.

En général, la phase solide recristallisée ainsi obtenue est séparée de la solution de recristallisation.

Par contre, la phase solide recristallisée, pour certaines applications ultérieures, peut être remise en suspension aqueuse sans nul dommage pour les structures cristallines, en particulier quand lesdites structures sont monomorphes longilignes.

EP 0 406 550 A1

La séparation de la phase solide recristallisée peut s'effectuer par tout moyen connu tel que décantation, filtration sous pression ou sous vide, hydrocyclonage, électrophorèse, centrifugation ...

La phase aqueuse obtenue lors de la séparation liquide/solide qui contient encore en solution du sulfate de calcium et certaines impuretés hydrosolubles peut être recyclée à l'étape de la formation de la solution aqueuse de sulfate de calcium semihydraté en y ajoutant la quantité d'eau nécessaire pour combler les pertes lors de la séparation et en effectuant par ajouts les corrections de concentrations pour les divers agents intervenant ou non dans le procédé selon l'invention.

La phase solide, recueillie à l'issue de la séparation des phases liquide/solide, est formée de structures cristallines purifiées et bien individualisées. Les structures cristallines qui sont, à la demande polymorphes ou monomorphes longilignes, ne nécessitent ni stabilisation thermique, ni revêtement de protection comme le préconise l'art connu, et mises en présence d'eau saturée en sulfate de calcium, elles conservent toutes leurs caractéristiques et en particulier leur longueur et leur facteur de forme maîtrisés.

Les structures cristallines monomorphes longilignes produites conformément au procédé selon l'invention se composent de cristaux individualisés ou associés au plus trois à trois selon leur grand axe par recouvrement partiel. Lesdites structures disposent selon la demande, d'une longueur moyenne comprise entre 2 micromètres et 200 micromètres, d'une faible dispersion des longueurs et d'un facteur de forme maîtrisé (rapport de la longueur moyenne au plus grand diamètre apparent moyen) qui peut varier à la demande dans le domaine de 2/1 à 50/1.

Les structures cristallines de sulfate de calcium dihydraté purifié peuvent être transformées thermiquement, si cela s'avère souhaitable pour certains emplois, en structures cristallines de sulfate de calcium semihydraté quand le traitement thermique est pratiqué à une température comprise entre 90°C et 250°C, ou encore d'anhydrites insolubles quand le traitement thermique dépasse la température de 250°C (anhydrite II ou surcuit) ou de 1 200°C (anhydrite I), lesdites structures cristallines conservant au terme du traitement thermique toutes les caractéristiques dimensionnelles, et en particulier longueur et facteur de forme, détenus par les structures dihydratées avant le traitement thermique.

Les structures cristallines polymorphes purifiées selon l'invention peuvent être utilisées dans de nombreux domaines industriels par exemple, dans les ciments, dans la production de plâtres, ou autres.

Par contre, les structures cristallines monomorphes purifiées selon l'invention, peuvent être utilisées dans de nombreux domaines industriels dès lors que leur longueur et leur facteur de forme maîtrisés les autorisent à jouer, par exemple, un rôle de renfort dans certains matériaux ou un rôle de charge dans d'autres matériaux pour en améliorer les caractéristiques mécaniques, optiques, thermiques, d'aspect de surface ou autres.

Les structures cristallines purifiées selon l'invention, qu'elles soient polymorphes ou monomorphes longilignes. disposent d'une blancheur exceptionnelle qui, mesurée selon la norme DIN 5033 sur les structures cristallines purifiées et rebroyées (selon une coupe granulométrique inférieure à 50 micromètres) est d'au moins 97 pour cent (blancheur du pigment du dioxyde de titane : environ 96 pour cent).

Ainsi les structures cristallines purifiées selon l'invention, parce qu'elles disposent de qualités aussi diverses que légèreté, très grande blancheur, opacité, brillant, facilité de dispersion, sont destinées plus spécialement à des domaines d'application aussi divers que ceux des ciments et plâtres ainsi que ceux du papier, de la peinture et des matières plastiques, lesdites structures pouvant, avant leur mise en oeuvre, subir un traitement approprié à chaque domaine d'application, tel que par exemple modification du pH, traitement de surface ou autres traitements bien connus de l'homme de métier.

L'intérêt et la portée de l'invention seront mieux compris grâce aux exemples qui l'illustrent et qui la comparent à l'art connu.

## EXEMPLE 1

Cet exemple poursuit le but d'illustrer, à travers l'obtention de sulfate de calcium dihydraté purifié, le progrès technique et l'activité inventive attachés au procédé selon l'invention grâce à l'obtention par recristallisation de sulfate de calcium doté d'un haut degré de pureté.

Dans cet esprit, plusieurs expérimentations (Numéros 1.1 à 1.6) ont été conduites, utilisant comme matière première du sulfate de calcium semihydraté impur provenant aussi bien du gypse naturel de diverses origines que du gypse synthétique (phosphogypse et désulfogypse).

Pour chaque expérimentation, et selon le procédé de l'invention, une solution aqueuse de sulfate de calcium a été préparée par dissolution de sulfate de calcium semihydraté impur ayant une coupe granulométrique inférieure à 200 micromètres dans la phase aqueuse maintenue sous agitation. La solution aqueuse de sulfate de calcium avait une concentration de environ 8,4 grammes par litre (exprimée en

8

sulfate de calcium dissous). Le milieu de dissolution était maintenu à une température de 15°C et son pH mesuré était de 6.

Au terme de l'opération de dissolution, la solution aqueuse contenant le sulfate de calcium dissous a été séparée (au moyen d'un filtre à cadres) de la phase solide insoluble formée par les impuretés à éliminer.

Puis la solution aqueuse de sulfate de calcium séparée a été ensemencée au moyen d'une amorce de gypse (environ 1,3 grammes par litre) broyé (ayant une coupe granulométrique inférieure à 60 micromètres) pour initier la recristallisation du sulfate de calcium dihydraté purifié. Au bout d'une heure de recristallisation, on recueillait le sulfate de calcium dihydraté purifié (environ 6,8 grammes par litre hors amorce).

La blancheur et la pureté des sources de gypse impur, du sulfate de calcium semihydraté à purifier provenant de la transformation thermique des sources de gypse, et du gypse purifié selon le procédé de l'invention, ont été mesurées selon le protocole décrit dans la norme DIN 5033 (blancheur), la pureté étant mesurée par dosage de la teneur en $SO_3$.

Les résultats de blancheur et pureté, propres à chaque expérimentation, ont été regroupés dans le Tableau A ci-après.

TABLEAU A

| Expérimentation N° | Source de gypse (Ca SO4,2H2O) à purifier (coupe granulométrique 200 $\mu$) | | | Ca SO4,1/2H2O à purifier provenant de la transformation thermique de la source de gypse (coupe granulométrique 200 $\mu$) | | Gypse (Ca SO4,2H2O) purifié selon le procédé | | | |
|---|---|---|---|---|---|---|---|---|---|
| | | | | | | Après recristallisation et sans rebroyage | | Après recristallisation et rebroyage < 50 $\mu$ | |
| | Origine et impuretés en % | Blancheur $\beta$ en % | Intensité coloration P en % | Blancheur $\beta$ en % | Intensité coloration P en % | Blancheur $\beta$ en % | Intensité coloration P en % | Blancheur $\beta$ en % | Intensité coloration P en % |
| 1.1 | Vaucluse 15 | 70,0 | 8,5 | 77,7 | 4,2 | 94,9 | 1,7 | 97,3 | 1,1 |
| 1.2 | Villiers-Adam 4 | 85,6 | 8,8 | 91,6 | 4,9 | 98,6 | 1,0 | 99,0 | 1,0 |
| 1.3 | Le Pin 12 | 80,0 | 9,0 | 85,2 | 5,5 | 96 | 1,5 | 97,6 | 1,0 |
| 1.4 | Phosphogypse France 4 | 75,2 | 10,6 | 80,2 | 7,0 | - | - | 98,2 | 1,0 |
| 1.5 | Désulfogypse France 8 | - | - | 76,3 | 10,0 | 96,7 | 1,6 | 97,1 | 1,4 |
| 1.6 | Phosphogypse Djakarta 3 | - | - | 89,3 | 3,2 | 97,0 | 1,0 | 97,8 | 0,9 |

Ces résultats révèlent que les structures cristallines obtenues, selon l'invention, dans le cadre de chaque expérimentation, sont (à l'observation microscopique) polymorphes, d'une grande blancheur et d'une excellente pureté, par comparaison avec l'art connu (FR 2,064,195 - Exemple 2 : degré de blancheur = 90,5 pour cent).

L'analyse qualitative et quantitative des impuretés présentes dans la source de sulfate de calcium (semihydrate impur) et dans le sulfate de calcium dihydraté recristallisé résultant de l'application du procédé selon l'invention, confirme la grande pureté du sulfate de calcium recristallisé et, par ce fait, sa grande blancheur.

Ainsi, ont été réunies dans le Tableau B ci-après, les impuretés présentes (dans le cas de l'expérimentation 1.3) dans le sulfate de calcium semihydraté impur et dans le sulfate de calcium dihydraté purifié résultant de l'application du procédé selon l'invention.

## TABLEAU B

| Impuretés présentes | % en poids d'impuretés présentes | |
|---|---|---|
| | dans la source de sulfate de calcium semihydraté à purifier | dans le sulfate de calcium dihydraté recristallisé selon l'invention |
| SiO2 | 2,53 | 0,130 * |
| Al2 O3 | 0,10 | < seuil de détection |
| Fe2 O3 | 0,14 | 0,003 |
| Mg O | 0,42 | 0,030 |
| K2 O | 0,09 | 0,000 |
| Na2 O | 0,02 | 0,010 |
| Ca CO3 | 9,07 | 0,030 |
| TOTAL | 12,37 | 0,203 |

* Remarque : cette teneur en silice (Si O2) apparemment élevée par rapport aux autres composants n'est pas consécutive à l'application du procédé selon l'invention, mais à l'usage d'une eau de dissolution contenant initialement 15 milligrammes ar litre de silice (Si O2) dissoute dès le départ.

Les résultats d'analyse énoncés dans le Tableau B conduisent à affirmer l'extrême pureté du sulfate de calcium dihydraté obtenu selon le procédé de l'invention.

## EXEMPLE 2

Cet exemple illustre la capacité du procédé, selon l'invention, à diminuer de manière conséquente la contamination radioactive du sulfate de calcium semihydraté impur (dans le même temps où les autres impuretés sont éliminées).

En pratique, du sulfate de calcium semihydraté impur provenant du traitement thermique de phosphogypse a été mis en solution dans une phase aqueuse maintenue sous agitation et à la température de 15° C. La solution aqueuse contenait 8,4 grammes par litre de sulfate de calcium (exprimée en sulfate de calcium dissous) et avait un pH réglé à 7.

A la fin de l'opération de dissolution, la solution aqueuse de sulfate de calcium a été séparée, par filtration, de la phase solide insoluble formée par les impuretés présentes à éliminer.

La solution aqueuse ainsi séparée a été ensemencée par l'intermédiaire d'une amorce de gypse (environ 1,3 grammes par litre) broyé (de coupe granulométrique inférieure à 60 micromètres) pour initier la recristallisation du sulfate de calcium dihydraté purifié (environ 6,9 grammes par litre hors amorce au bout d'une heure).

Le niveau de contamination radioactive a été mesuré au moyen d'un compteur BERTHOLD équipé d'une chambre d'analyse HARSHAW modèle 101 et d'un détecteur à semi-conducteur de silicium DJ 490 (commercialisé par la Société BERTHOLD, France), aussi bien sur le phosphogypse et le sulfate de calcium semihydraté correspondant, que sur le sulfate de calcium dihydraté recristallisé obtenu selon le procédé de l'invention et sur les impuretés séparées par filtration. Tous les résultats relatifs à ces mesures de niveau de contamination exprimés en Picocurie par gramme (pCi/g) ont été réunis dans le Tableau C ci-après.

TABLEAU C

| Echantillon | Niveau de contamination radioactive rayonnement en pCi/g | |
|---|---|---|
| | Total | α Radium |
| Phosphogypse | 98 | 21 |
| Phosphoplâtre | 100 | 29 |
| Sulfate de calcium dihydraté recristallisé selon l'invention | 5 | 0 |
| Impuretés éliminées par filtration | 315 | 60 |

Dès lors, le procédé selon l'invention permet l'obtention de sulfate de calcium dihydraté purifié dont le taux de contamination radioactive a été abaissé, dans le cas présent, de l'ordre de 20 fois.

## EXEMPLE 3

Cet exemple est une illustration de l'influence des caractéristiques dimensionnelles des particules de sulfate de calcium semihydraté impur sur la cinétique de recristallisation du sulfate de calcium dihydraté purifié selon le procédé de l'invention.

En pratique, du sulfate de calcium semihydraté impur (provenant de la région de LE PIN, France) contenant 15 pour cent en poids d'impuretés, a été soumis à une opération de sélection et/ou de broyage de telle manière que les particules disposent, dans le cadre de quatre expérimentations, de granulométries bien définies par les coupes :

3.1 : coupe granulométrique inférieure à 1 500 micromètres

3.2 : coupe granulométrique inférieure à 800 micromètres

3.3 : coupe granulométrique inférieure à 200 micromètres

3.4 : coupe granulométrique inférieure à 100 micromètres

Les diverses opérations de broyage et de sélection ont été réalisées dans un broyeur à marteaux du type FORPLEX n°2 (commercialisé par la Société FORPLEX, France), muni d'un sélecteur dynamique à recirculation permettant le classement des particules par leur dimension.

A l'issue du broyage et/ou de la sélection, la phase solide de sulfate de calcium semihydraté impur broyé et/ou sélectionné a été introduite dans une cuve de dissolution munie de moyens d'agitation et de réglage de la température de la phase liquide. La phase liquide était constituée par une solution aqueuse de recirculation contenant 1,8 grammes par litre de sulfate de calcium exprimé en sulfate de calcium dissous dont le pH était porté à 12 par l'introduction d'hydroxyde de sodium. Sa température était maintenue à 25°C.

La préparation de chaque solution aqueuse de sulfate de calcium dissous a été faite par la réalisation de suspensions de sulfate de calcium semihydraté impur, selon les coupes granulométriques précitées, dans la solution aqueuse de recirculation, toutes les autres caractéristiques étant maintenues identiques dans les quatre expérimentations pratiquées.

Au cours de la formation de la solution aqueuse de sulfate de calcium dissous, la phase aqueuse était maintenue sous une agitation suffisante pour éviter la sédimentation du sulfate de calcium semihydraté impur et favoriser sa dissolution.

Au terme de l'opération de dissolution, la solution aqueuse contenant le sulfate de calcium dissous à été séparée (au moyen d'un filtre à cadres) de la phase solide insoluble formée par les impuretés à éliminer.

La solution aqueuse de sulfate de calcium ainsi séparée, a été ensemencée au moyen de gypse recristallisé (environ 0,8 gramme par litre) sous forme d'aiguilles (de longueur comprise entre 60 micromètres et 80 micromètres) pour initier la recristallisation du sulfate de calcium dihydraté, ladite amorce ayant été préparée selon l'Exemple 2.3 de la Demande de Brevet Française N° 88-04338.

Au bout du temps de recristallisation fixé (1 heure et 2 heures), on recueillait le sulfate de calcium dihydraté purifié selon l'invention.

Les caractéristiques et/ou résultats attachés à chaque expérimentation ont été rassemblés dans le Tableau D ci-après.

TABLEAU D

| Expérimentation N° | Coupe granulométrique du sulfate de calcium semihydraté impur | Temps de dissolution en minutes du sulfate de calcium semihydraté impur | Concentration de la solution aqueuse contenant le sulfate de calcium dissous exprimée en g/l de sulfate de calcium dissous | Concentration de recristallisation exprimée en g/l de Ca SO4,2H2O recristallisé après : | |
|---|---|---|---|---|---|
| | | | | 1 heure | 2 heures |
| 3.1 | < 1 500 μ | 3 | 5,0 | 2,4 | 3,2 |
| 3.2 | < 800 μ | 3 | 6,3 | 4,5 | 5,0 |
| 3.3 | < 200 μ | 3 | 6,6 | 5,2 | 5,7 |
| 3.4 | < 100 μ | 3 | 6,8 | 5,4 | 5,9 |

EP 0 406 550 A1

Les résultats obtenus montrent qu'il est possible d'optimiser la cinétique de recristallisation en jouant sur la coupe granulométrique du sulfate de calcium semihydraté mis en oeuvre.

## EXEMPLE 4

Cet exemple est une illustration de l'influence de la température de la phase aqueuse de dissolution du sulfate de calcium semihydraté impur sur la cinétique de recristallisation du sulfate de calcium dihydraté purifié.

En pratique, du sulfate de calcium semihydraté impur (région de LE PIN, France, contenant 15 pour cent en poids d'impuretés) a été soumis à une opération de broyage et/ou de sélection suivie d'une dissolution dans une solution aqueuse de recyclage contenant 2,0 grammes par litre de sulfate de calcium dissous (dont le pH avait été réglé à la valeur de 12 par introduction d'hydroxyde de sodium) portée à une température précise avant de lui faire subir les autres étapes du procédé de l'invention.

Les diverses expérimentations ont été les suivantes :

4.1 : le sulfate de calcium semihydraté impur a été soumis à une opération de broyage/sélection donnant une coupe granulométrique inférieure à 200 micromètres, puis il a été dissous dans la phase aqueuse alcalinisée précitée, maintenue à une température de 5°C, avant de subir les autres étapes du procédé.

4.2 : le sulfate de calcium semihydraté impur, de même coupe granulométrique que celui de l'expérimentation 4.1, a été dissous dans la phase aqueuse alcalinisée précitée maintenue à la température de 15°C, avant de subir les autres étapes du procédé.

4.3 : le sulfate de calcium semihydraté impur de même coupe granulométrique que celui de l'expérimentation 4.1 a été dissous dans la phase aqueuse alcalinisée précitée, maintenue à une température de 27°C, avant de subir les autres étapes du procédé.

4.4 : le sulfate de calcium semihydraté impur, de même coupe granulométrique que celui de l'expérimentation 4.1 a été dissous dans la phase aqueuse alcalinisée précitée, maintenue à la température de 35°C, avant de subir les autres étapes du procédé.

4.5 : le sulfate de calcium semihydraté impur, de même coupe granulométrique que celui de l'expérimentation 4.1 a été dissous dans la phase aqueuse alcalinisée précitée, maintenue à la température de 40°C, avant de subir les autres étapes du procédé.

A l'issue de la dissolution (dont le temps a été fixé à 3 minutes) du sulfate de calcium semihydraté impur dans les conditions de température précitées, chaque solution aqueuse a été séparée de la phase solide insoluble formée par les impuretés à éliminer.

Les cinq solutions aqueuses contenant le sulfate de calcium dissous ont été ensemencées au moyen d'une amorce de gypse (environ 0,9 gramme par litre) broyé ayant une coupe granulométrique inférieure à 60 micromètres pour initier la recristallisation du sulfate de calcium dihydraté. Au bout des temps de recristallisation, fixés à 1 heure et 2 heures, on recueillait le sulfate de calcium dihydraté purifié selon l'invention.

Les caractéristiques et/ou résultats attachés à chaque expérimentation qui ont été rassemblés dans le Tableau E ci-après, montrent que la cinétique de recristallisation tend vers une valeur asymptotique dès lors que la température dépasse le seuil préférentiel de 35°C.

TABLEAU E

| Expérimentation N° | Température de la solution aqueuse contenant le sulfate de calcium dissous | Concentration de la solution aqueuse contenant le sulfate de calcium dissous exprimée en g/l de sulfate de calcium dissous | Concentration de recristallisation exprimée en g/l de Ca SO4,2H2O recristallisé après : | |
|---|---|---|---|---|
| | | | 1 heure | 2 heures |
| 4.1 | 5°C | 7,1 | 2,7 | 4,3 |
| 4.2 | 15°C | 7,1 | 4,6 | 5,6 |
| 4.3 | 27°C | 7,1 | 5,9 | 6,3 |
| 4.4 | 35°C | 7,1 | 6,3 | 6,4 |
| 4.5 | 40°C | 7,1 | 6,4 | 6,4 |

EP 0 406 550 A1

## EXEMPLE 5

Cet exemple illustre l'influence de la concentration en sulfate de calcium dissous sur la cinétique de recristallisation du sulfate de calcium dihydraté purifié.

Dans ce but, du sulfate de calcium semihydraté impur (provenant de la transformation thermique du gypse de LE PIN, France, contenant 15 pour cent en poids d'impuretés) a été dissous selon des quantités croissantes, dans des volumes appropriés, dans une solution aqueuse contenant déjà 2,3 grammes par litre de sulfate de calcium (exprimée en sulfate de calcium dissous) permettant de cette manière de simuler le recyclage, à l'étape de dissolution, de la phase aqueuse résultant de la recristallisation et de la séparation du sulfate de calcium dihydraté purifié.

Le pH de ladite solution de recyclage était maintenu à 11,6 par ajout d'hydroxyde de sodium. La température de la solution de recyclage, au moment de la dissolution du sulfate de calcium semihydraté impur, était de 15° C.

A l'issue de la dissolution et de l'élimination des impuretés par une filtration, les solutions aqueuses contenant chacune une quantité spécifique de sulfate de calcium dissous, exprimée en grammes par litre (expérimentations 5.1 à 5.4) ont été ensemencées, au moyen d'amorces de gypse broyé (selon une quantité propre à chacune), ayant une coupe granulométrique inférieure à 60 micromètres, pour initier la recristallisation du sulfate de calcium dihydraté purifié. Au bout des temps de recristallisation fixés à 1 heure et 2 heures, on recueillait le sulfate de calcium dihydraté purifié selon l'invention.

Les caractéristiques et/ou résultats propres à chaque expérimentation qui ont été rassemblés dans le Tableau F ci-après montrent que la cinétique de recristallisation est d'autant plus rapide que la concentration en sulfate de calcium dissous est élevée.

TABLEAU F

| Expérimentation N° | Concentration de la solution aqueuse contenant le sulfate de calcium dissous en g/l de Ca SO4 dissous | Concentration en amorces de germination exprimée en g/l | Concentration de recristallisation exprimée en g/l de Ca SO4,2H2O recristallisé après : | |
|---|---|---|---|---|
| | | | 1 heure | 2 heures |
| 5.1 | 5,3 | 0,75 | 1,4 | 2,1 |
| 5.2 | 7,4 | 1,00 | 4,8 | 5,8 |
| 5.3 | 8,1 | 1,10 | 6,1 | 7,1 |
| 5.4 | 8,4 | 1,15 | 6,9 | 7,7 |

EP 0 406 550 A1

## EXEMPLE 6 :

Cet exemple illustre l'influence de la quantité d'amorces de gypse mise en oeuvre sur la cinétique de recristallisation du sulfate de calcium dihydraté purifié.

A ce titre, du sulfate de calcium semihydraté impur contenant 15 pour cent en poids d'impuretés (provenant de la transformation thermique du gypse de LE PIN, France) a été dissous selon une quantité fixée à 6.6 grammes par litre de sulfate de calcium (exprimée en sulfate de calcium dissous), dans une solution aqueuse contenant déjà 1,9 grammes par litre de sulfate de calcium (exprimée en sulfate de calcium dissous) permettant de simuler le recyclage à l'étape de dissolution de la phase aqueuse provenant de la recristallisation du sulfate de calcium dihydraté purifié.

Le pH de la solution de recyclage était de 11,6 (réglé par l'utilisation de soude (Na OH)) et la température de ladite solution était maintenue à 25° C.

A l'issue de la dissolution et de l'élimination des impuretés par une filtration, la solution aqueuse de dissolution a été utilisée pour la préparation de trois expérimentations (6.1 à 6.3) consistant à ensemencer un volume de la solution de dissolution précitée au moyen de quantités croissantes (propres à chaque expérimentation) d'amorces de gypse à structures cristallines longilignes, de longueur et de facteur de forme maîtrisés (obtenues selon l'Exemple N°2.3 de la Demande de Brevet Française N°88-04338), pour initier la recristallisation du sulfate de calcium dihydraté purifié.

Les temps de cristallisation ont été respectivement fixés à 0,5 heure, 1 heure, 1,5 heure et 2 heures.

Les caractéristiques et/ou résultats propres à chaque expérimentation ont été rassemblés dans le Tableau G ci-après.

TABLEAU G

| Expérimentation N° | Quantité de sulfate de calcium dissous exprimée en g/l de Ca SO4 | Quantité d'amorces de germination exprimée en g/l de la solution de dissolution | Concentration de recristallisation (hors amorces) exprimée en g/l de Ca SO4,2H2O recristallisé après : | | | |
|---|---|---|---|---|---|---|
| | | | 0,5 h | 1 h | 1,5 h | 2 h |
| 6.1 | 6,6 | 0,9 | 4,4 | 5,2 | 5,5 | 5,7 |
| 6.2 | 6,6 | 4,5 | 5,6 | 5,8 | 5,9 | 5,9 |
| 6.3 | 6,6 | 9,00 | 5,9 | 5,9 | 5,9 | 5,9 |

EP 0 406 550 A1

Les résultats obtenus à partir de chaque expérimentation montrent qu'il est possible d'optimiser la cinétique de recristallisation en intervenant sur la quantité d'amorces de gypse pur mises en oeuvre pour initier la recristallisation du sulfate de calcium dihydraté purifié.

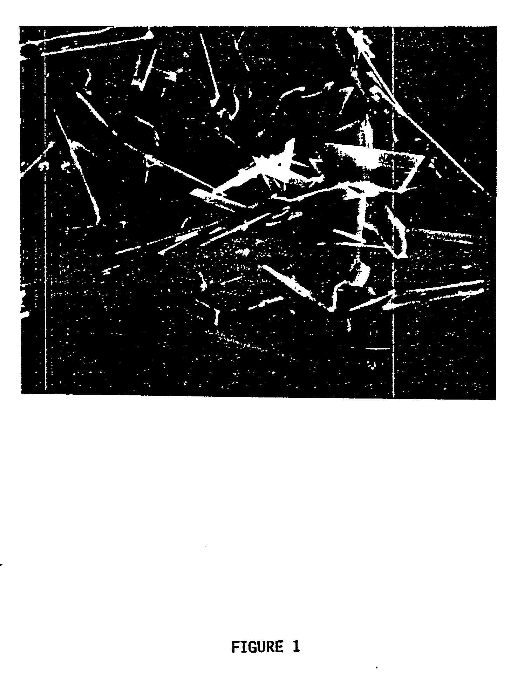

**EXEMPLE 7** (cas illustré par les Figures 1, 2 et 3)

Cet exemple illustre l'influence du pH de la solution, qui est ajusté par l'agent régulateur de recristallisation, sur l'obtention de structures cristallines longilignes (monomorphes) à longueur et à facteur de forme maîtrisés.

En pratique, du sulfate de calcium semihydraté impur (résultant du traitement thermique du gypse de la région de LE PIN, France, contenant 15 pour cent en poids d'impuretés) a été soumis à une opération de broyage et ou de sélection (coupe granulométrique inférieure à 200 micromètres) suivie d'une dissolution à raison de 6.0 grammes par litre exprimés en sulfate de calcium dissous dans une solution aqueuse, maintenue sous agitation et contenant déjà 1,9 grammes par litre de sulfate de calcium (exprimée en sulfate de calcium dissous). Les températures de dissolution et de recristallisation étaient maintenues à 15° C. Le pH fixé pour chaque essai était maintenu constant dans les deux étapes de dissolution et de recristallisation.

Après les étapes de dissolution et d'élimination des impuretés par une séparation solide liquide, la solution aqueuse de sulfate de calcium ainsi isolée a été ensemencée au moyen de 1,3 grammes par litre d'une amorce de gypse à structure cristalline longiligne, de longueur et de facteur de forme maîtrisés, obtenue selon l'Exemple n°2.3 de la Demande de Brevet Française N°88-04338, pour initier la recristallisation du sulfate de calcium dihydraté purifié.

Au bout d'un temps de recristallisation approprié (1 heure) on recueillait le sulfate de calcium dihydraté purifié selon l'invention.

Trois expérimentations ont été conduites (expérimentations 7.1 à 7.3).

7.1 : Dans le cas de cette expérimentation, l'étape de recristallisation s'est effectuée à un pH égal à 8. Comme l'illustre la Figure 1 et malgré un ensemencement par une amorce à structure cristalline longiligne à longueur et à facteur de forme bien maîtrisés, le pH, insuffisamment alcalin, conduit à l'obtention de structures cristallines polymorphes, bien purifiées mais de longueur et de facteur de forme non maîtrisés.

7.2 : dans le cas de cette expérimentation, l'étape de recristallisation s'est effectuée à un pH égal à 11,6 par l'introduction en quantité contrôlée d'un agent régulateur de recristallisation alcalin (chaux).

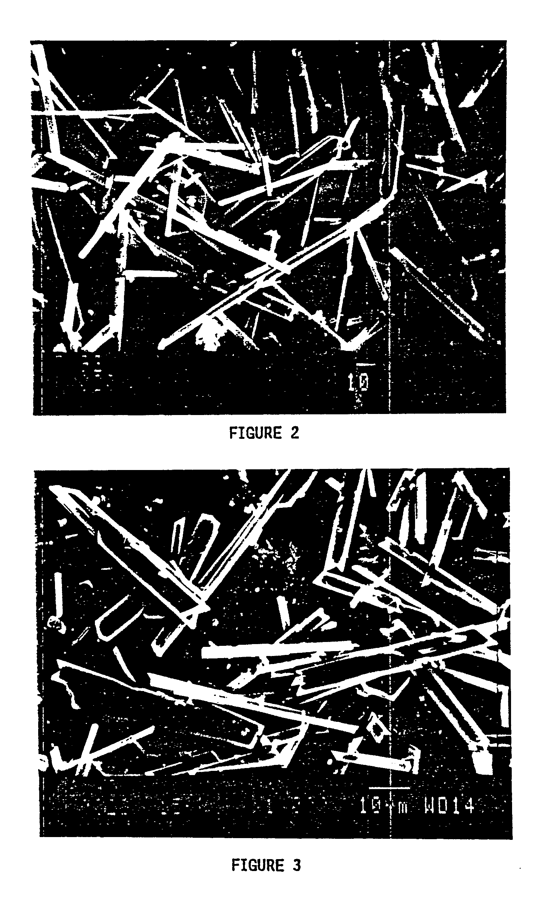

Cette expérimentation, illustrée par la Figure 2, conduit à l'obtention de structures cristallines longilignes purifiées (monomorphes) dotées d'une longueur (30/50 micromètres) et d'un facteur de forme (10/20) maîtrisés.

7.3 : dans le cas de cette dernière expérimentation, l'étape de recristallisation s'est effectuée à un pH égal à 12,5, par l'introduction (contrôlée) du même agent régulateur de recristallisation alcalin.

Cette expérimentation, illustrée par la Figure 3, conduit à l'obtention de structures cristallines longilignes purifiées, dotées d'une longueur maîtrisée (30/50 micromètres), équivalente à celle de l'expérimentation 7.2, et d'un facteur de forme maîtrisé (6/10) mais ayant diminué en raison de l'augmentation des diamètres apparents des aiguilles.

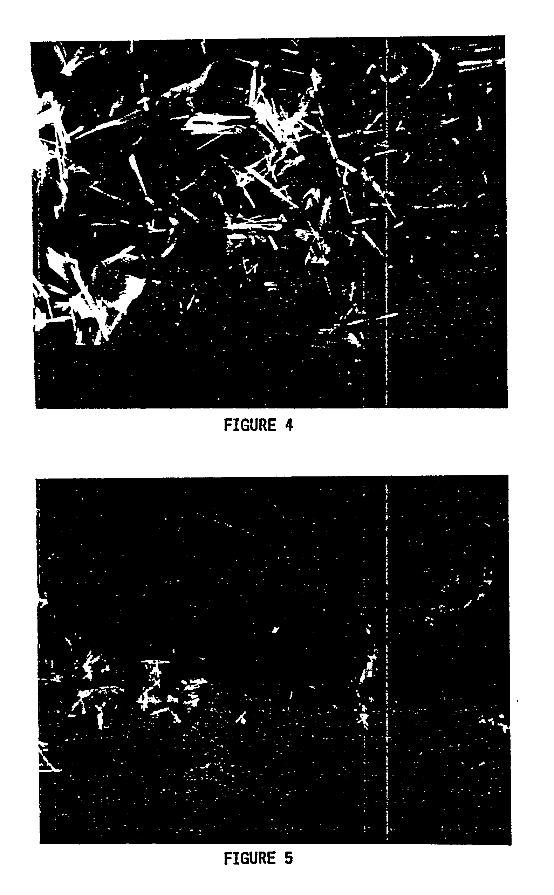

**EXEMPLE 8** (cas illustré par les Figures 4 à 7)

Cet exemple illustre l'influence de la morphologie (longueur et facteur de forme) de l'amorce de germination sur l'obtention de structures cristallines longilignes (monomorphes) à longueur et à facteur de forme bien maîtrisés, la recristallisation s'effectuant en présence d'un agent régulateur distinct de l'amorce réglant le pH de la solution de recristallisation à une valeur comprise entre 9 et 12 (hormis pour l'expérimentation 8.1).

Pour ce faire, un sulfate de calcium semihydraté impur contenant 5 pour cent en poids d'impuretés (résultant de la transformation thermique de gypse de VILLIERS-ADAM, France) a été soumis à une opération de sélection (coupe granulométrique inférieure à 800 micromètres). Au terme de cette sélection, le sulfate de calcium semihydraté impur a été dissous selon une quantité fixée à 6,0 grammes par litre (exprimée en sulfate de calcium dissous) dans une solution aqueuse contenant déjà en solution 1,9 grammes par litre de sulfate de calcium (exprimée en sulfate de calcium dissous).

Les températures de dissolution et de recristallisation étaient maintenues à 20°C et le pH réglé à 11,6 grâce à la présence d'une quantité adéquate d'hydroxyde de sodium (agent régulateur de recristallisation).

A l'issue de l'étape de dissolution et d'élimination des impuretés par une séparation solide/liquide, la solution aqueuse de dissolution a été utilisée pour la préparation de quatre expérimentations (8.1 à 8.4) consistant à ensemencer, pour chaque expérimentation, un volume de ladite solution au moyen de 0,9 gramme par litre d'amorces de gypse pour initier la recristallisation du sulfate de calcium dihydraté purifié.

Au bout d'un temps de recristallisation fixé à 1 heure, on recueillait le sulfate de calcium dihydraté purifié selon l'invention.

Les quatre expérimentations réalisées l'ont été dans les conditions suivantes :

8.1 : l'étape de recristallisation, illustrée par la Figure 4, s'est effectuée à un pH de 8 en présence de 0,9 gramme par litre d'amorces de gypse naturel broyé de coupe granulométrique inférieure à 50 micromètres. Le pH insuffisamment alcalin de la solution de recristallisation conduit à l'obtention de structures cristallines polymorphes purifiées mais démunies de longueur et de facteur de forme maîtrisés.

8.2 : l'étape de recristallisation, illustré par la Figure 5, s'est effectuée à un pH de 11,6 en présence de 0,9 gramme par litre d'amorces de gypse naturel broyé de coupe granulométrique inférieure à 50 micromètres.

Cette expérimentation conduit à l'obtention de structures cristallines purifiées, de tendance longiligne, comportant encore des structures cristallines anarchiques (mâcles, fers de lance, ...).

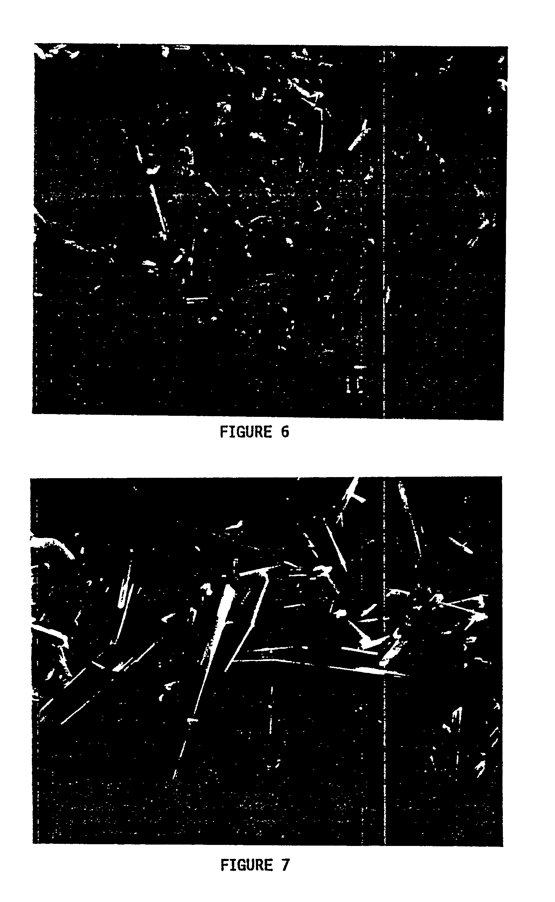

8.3 : l'étape de recristallisation, illustrée par la figure 6, s'est faite à un pH de 11.6 en présence d'amorces de gypse de recristallisation de structure cristalline longiligne ayant une longueur comprise dans l'intervalle 2 micromètres à 3 micromètres, préparées selon l'Exemple 5.4 de la Demande de Brevet Française N°88-04338.

Cette expérimentation conduit à l'obtention de structures cristallines longilignes purifiées dotées d'une longueur moyenne (10 micromètres à 25 micromètres) et d'un facteur de forme moyen (de 3 à 8) très bien maîtrisés en comparaison des structures cristallines obtenues dans le cadre de l'expérimentation 8.2 (Figure 5).

8.4 dans cette ultime expérimentation, illustrée par la Figure 7, l'étape de recristallisation s'est effectuée à un pH de 11,6, en présence d'amorces de gypse de recristallisation ayant une structure cristalline longiligne de longueur comprise dans l'intervalle 60 micromètres à 80 micromètres et d'un facteur de forme maîtrisés (20), préparées selon l'Exemple 2.3 de la Demande de Brevet Française N°88-04338.

Cette expérimentation conduit à la recristallisation de structures cristallines longilignes purifiées, dotées d'une longueur moyenne (de 40 micromètres à 60 micromètres) et d'un facteur de forme moyen (9 à 27) maîtrisés, ayant encore augmenté par rapport aux facteurs deforme des expérimentations précitées.

**Revendications**

1) Procédé de préparation par voie aqueuse de sulfate de calcium purifié, de grande blancheur, se présentant à la demande sous l'aspect de structures cristallines polymorphes ou monomorphes longilignes, caractérisé en ce qu'il comprend :

a) la formation d'une solution aqueuse par dissolution de sulfate de calcium semihydraté impur, à une concentration d'au plus 13,0 grammes par litre (exprimée en Ca SO4 dissous) et à un pH d'au moins 5,5,

b) la séparation de la solution aqueuse contenant le sulfate de calcium dissous, de la phase solide insoluble formée par les impuretés à éliminer,

c) la recristallisation du sulfate de calcium purifié sous la forme dihydratée à partir de la solution aqueuse issue de l'étape <b>, éventuellement en présence d'une amorce de germination introduite dans le milieu réactionnel,

d) la séparation après recristallisation de la phase aqueuse appauvrie en sulfate de calcium dissous, de la phase solide constituée par le sulfate de calcium purifié recristallisé,

e) le recyclage de la phase aqueuse appauvrie en sulfate de calcium dissous vers l'étape <a> de dissolution de sulfate de calcium impur.

2) Procédé de préparation selon la revendication 1, caractérisé en ce que les particules de sulfate de calcium semihydraté impur de l'étape <a> ont une coupe granulométrique d'au plus 10 000 micromètres, préférentiellement d'au plus 5 000 micromètres et très préférentiellement d'au plus 1 500 micromètres.

3) Procédé de préparation selon les revendications 1 ou 2, caractérisé en ce que les particules de la source de sulfate de calcium semihydraté impur de l'étape <a> sont soumises à une opération de broyage et/ou de sélection de telle manière qu'elles aient une coupe granulométrique spécifique choisie dans l'intervalle 5 micromètres à 500 micromètres, préférentiellement dans l'intervalle 5 micromètres à 200 micromètres et très préférentiellement dans l'intervalle 5 micromètres à 100 micromètres.

4) Procédé de préparation selon l'une quelconque des revendications 1 à 3, caractérisé en ce que la source de sulfate de calcium semihydraté est à une température comprise dans l'intervalle 150° C à 15° C.

5) Procédé de préparation selon l'une quelconque des revendications 1 à 4, caractérisé en ce que la concentration en sulfate de calcium dissous de la solution aqueuse de dissolution de l'étape <d> est préférentiellement comprise entre 11 grammes par litre et 6 grammes par litre de sulfate de calcium dissous.

6) Procédé de préparation selon l'une quelconque des revendications 1 à 5, caractérisé en ce que la température de dissolution est au plus de 70° C, préférentiellement choisie dans l'intervalle 0° C à 50° C et très préférentiellement choisie dans l'intervalle 0° C à 35° C.

7) Procédé de préparation selon l'une quelconque des revendications 1 à 6, caractérisé en ce que un agent retardateur de recristallisation est introduit au cours de l'étape <a> de dissolution.

8) Procédé de préparation selon la revendication 7, caractérisé en ce que l'agent retardateur de recristallisation est préférentiellement choisi dans le groupe constitué par les protéines dégradées, les acides carboxyliques hydrosolubles et leurs sels, les acides phosphoniques, phosphoriques, sulfoniques et leurs sels ainsi que les glucoses.

9) Procédé de préparation selon l'une quelconque des revendications 1 à 8, caractérisé en ce que la phase solide non dissoute provenant de la séparation de la phase aqueuse contenant le sulfate de calcium dissous de l'étape <b> est recyclée dans l'étape <a> de dissolution.

10) Procédé de préparation selon l'une quelconque des revendications 1 à 9, caractérisé en ce que la dissolution du sulfate de calcium semihydraté impur s'effectue par étapes successives.

11) Procédé de préparation selon la revendication 10, caractérisé en ce que chaque étape de dissolution est suivie d'une étape de séparation liquide/solide.

12) Procédé de préparation selon l'une quelconque des revendications 1 à 11, caractérisé en ce que on introduit, dans la solution aqueuse de recristallisation issue de l'étape <b>, une amorce de germination.

13) Procédé de préparation selon la revendication 12, caractérisé en ce que l'amorce de germination est préférentiellement choisie dans le groupe constitué par les sulfates de calcium, le sulfate double de calcium et potassium, le sulfate double de calcium et d'ammonium et par le trisulfoaluminate de calcium, pris seuls ou en combinaison.

14) Procédé de préparation selon l'une quelconque des revendications 1 à 13, caractérisé en ce que l'amorce de germination, éventuellement sélectionnée et/ou broyée, a une structure polymorphe.

15) Procédé de préparation selon l'une quelconque des revendications 1 à 13, caractérisé en ce que l'amorce de germination, éventuellement sélectionnée et/ou broyée, a une structure cristalline longiligne.

16) Procédé de préparation selon l'une quelconque des revendications 1 à 15, caractérisé en ce que on introduit dans le milieu réactionnel de recristallisation un agent régulateur de recristallisation distinct de l'amorce de germination.

17) Procédé de préparation selon la revendication 16, caractérisé en ce que dans le but de produire des structures cristallines polymorphes, le pH du milieu de recristallisation est réglé entre 5,5 et 9.

18) Procédé de préparation selon l'une quelconque des revendications 16 ou 17, caractérisé en ce que l'agent régulateur de recristallisation est de caractère chimiquement neutre et est préférentiellement choisi dans le groupe constitué par les halogénures, les sulfates, les nitrates, les silicates, les halogénosilicates de lithium, de sodium, de potassium, d'ammonium, de calcium, de magnésium, d'aluminium, pris seuls ou en combinaison.

19) Procédé de préparation selon la revendication 16, caractérisé en ce que dans le but de produire des structures cristallines monomorphes longilignes dotées d'une longueur et d'un facteur de forme maîtrisés, le pH du milieu de recristallisation est réglé entre 9 et 13.

20) Procédé de préparation selon l'une quelconque des revendications 16 ou 19, caractérisé en ce que l'agent régulateur de recristallisation est de caractère chimiquement alcalin et est préférentiellement choisi dans le groupe constitué par les hydroxydes alcalins, l'hydroxyde d'ammonium, les hydroxydes alcalino-terreux, l'hydroxyde de magnésium, l'hydroxyde de calcium, par les ciments PORTLAND, par les ciments alumineux, par l'aluminate de calcium, par les aluminates alcalins et les aluminosilicates, seuls ou en combinaison.

21) Procédé de préparation selon l'une quelconque des revendications 16 à 20, caractérisé en ce que l'agent régulateur de recristallisation est constitué de la combinaison d'au moins deux agents régulateurs de cristallisation provenant des groupes à caractère neutre et à caractère alcalin.

22) Procédé de préparation selon l'une quelconque des revendications 16 à 21, caractérisé en ce que l'agent régulateur de recristallisation est introduit dans la solution aqueuse de recristallisation à raison de 0,01 gramme par litre à 3,0 grammes par litre et préférentiellement de 0,1 gramme par litre à 0,75 gramme par litre.

23) Procédé de préparation selon l'une quelconque des revendications 1 à 22, caractérisé en ce que la température de la solution de recristallisation est choisie proche de la température de la solution de dissolution.

24) Procédé de préparation selon l'une quelconque des revendications 1 à 23, caractérisé en ce que les structures cristallines purifiées constituant la phase solide provenant de l'étape de séparation <d> sont soumises à un traitement thermique.

25) Structures cristallines de sulfate de calcium dihydraté purifié selon la revendication 24, caractérisées en ce que le traitement thermique est un séchage.

26) Structures cristallines de sulfate de calcium semihydraté purifié selon la revendication 24, caractérisées en ce que le traitement thermique est pratiqué à une température comprise entre 90°C et 250°C.

27) Structures cristallines de sulfate de calcium anhydre purifié selon la revendication 24, caractérisées en ce que le traitement thermique est pratiqué à une température d'au moins 250°C pour l'obtention d'anhydrite II, et d'au moins 1 200°C pour l'obtention d'anhydrite I.

28) Structures cristallines monomorphes longilignes de sulfate de calcium purifié selon l'une quelconque des revendications 1 à 27, caractérisées en ce qu'elles disposent, à la demande, d'une longueur moyenne comprise entre 2 micromètres et 200 micromètres et d'un facteur de forme compris dans l'intervalle 2/1 à 50 1.

29) Applications de structures cristallines obtenues selon l'une quelconque des revendications 1 à 28, sous la forme solide ou sous la forme d'une dispersion dans une phase liquide, aux domaines des ciments et plâtres, du papier, de la peinture et des matières plastiques.

FIGURE 1

FIGURE 2

FIGURE 3

FIGURE 4

FIGURE 5

FIGURE 6

FIGURE 7

Office européen
des brevets

**RAPPORT DE RECHERCHE EUROPEENNE**

Numero de la demande

EP    90 10 9533

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-126050 (BOLIDEN)<br>* revendications 1-3; exemple 3 *<br>--- | 1, 5, 6 | C01F11/46<br>C04B11/00<br>C04B22/14 |
| A | EP-A-56200 (GALCERAN-VILA)<br>* revendications 1-7; exemple 1 *<br>--- | 1, 16-20 | C04B14/38<br>D21H13/46 |
| A | GB-A-1297535 (GIULINI)<br>--- | | C09C1/02<br>C08K3/30 |
| A | US-A-3645677 (AKAZAWA)<br>--- | | |
| P,X | EP-A-334292 (PLATRES LAFARGE)<br>* le document en entier *<br>------ | 1-29 | |

DOMAINES TECHNIQUES
RECHERCHES (Int. Cl.5)

C01F
C09C

Le présent rapport a été établi pour toutes les revendications

| Lieu de la recherche | Date d'achèvement de la recherche | Examinateur |
|---|---|---|
| LA HAYE | 04 OCTOBRE 1990 | ZALM W.E. |